# EUROPEAN PATENT APPLICATION

(11) **EP 3 967 543 A1**
(43) Date of publication of application: **16.03.2022**
(21) Application number: 21195927.5
(22) Date of filing: 10.09.2021
(51) Int. Cl.: B60L 50/50, B60L 50/60, B60L 58/18, B62M 6/90

(54) **BATTERY FOR AN ELECTRIC VEHICLE, POWER SUPPLY SYSTEM OF AN ELECTRIC VEHICLE INCLUDING AN ARRAY OF SUCH BATTERIES, AND ELECTRIC VEHICLE**

(30) Priority: 10.09.2020 IT 202000021460
(71) Applicant: Altra S.p.A., 16138 Genova (IT)
(72) Inventor: NICORA, Fabio, 31812-210 Belo Horizonte - Minas Gerais (BR); PIRODDI, Valter, 10137 Torino (IT); ZAPPATERRA, Massimo, 16127 Genova (IT); BERTOLOTTO, Cristian, 19015 Levanto (SP) (IT)
(74) Representative: Bertolotto, Simone

(57) **Abstract**

A battery (10) for an electric vehicle, comprising a casing (12) which externally houses a first cathode connector (18), a second cathode connector (25), a first anode connector (20), and a second anode connector (20), and which internally houses a group of storage cells (13) electrically arranged between a common cathode node (34) and a common anode node (36), a first bus bar (22) connecting the common cathode node (34) to the first cathode connector (18), a second bus bar (28) connecting the common cathode node (34) to the second cathode connector (25), a third bus bar (24) connecting the common anode node (36) to the first anode connector (20), and a fourth bus bar (30) connecting the common anode node (36) to the second anode connector ( 26).

## Description

### CROSS-REFERENCE TO RELATED APPLICATIONS

This patent application claims priority from Italian patent application no. 102020000021460 filed on 10/09/2020.

### TECHNICAL FIELD

The invention relates to a battery for an electric vehicle, to a power supply system of an electric vehicle including an array of said batteries and to an electric vehicle including said power supply system.

### KNOWN STATE OF THE ART

As it is known, in a purely electric vehicle (EV), an electric motor is the only source of energy used to drive the vehicle; in a hybrid vehicle (HV), the electric motor is an auxiliary source of energy added to the internal combustion engine.

In general, the energy powering the electric motor is typically stored in one or more storage batteries.

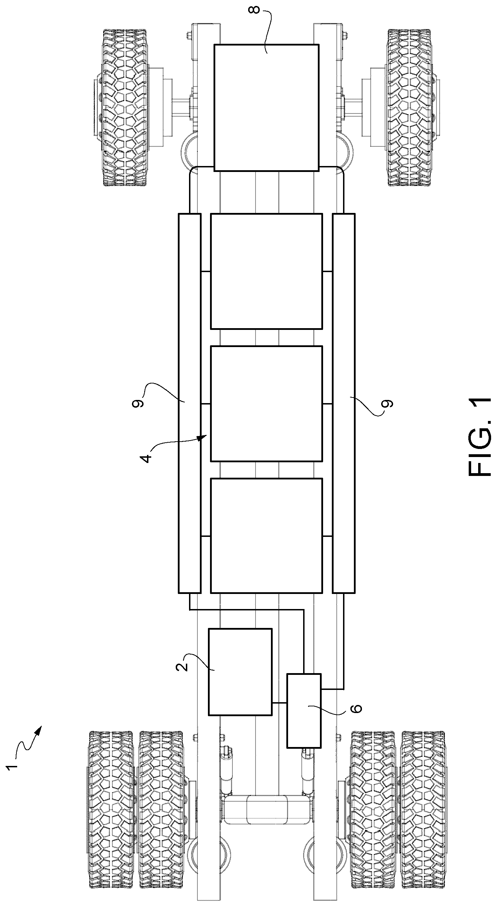

Figure 1 schematically shows an electric vehicle 1 provided with an electric motor 2 and with a battery group 4 to power the electric motor. Between the battery group 4 and the electric motor 2 there is electrically arranged, in a known manner, a traction inverter 6 to turn an electric power received, as an input, by the invert 6 into an electric power to be supplied to the electric motor 2 for the operation thereof. The battery group 4 comprises a plurality of batteries connected to one another in parallel, between the traction inverter 6 and a module 8 for the distribution of the power supply to the loads (also known as HVPDU - "High Voltage Power Distribution Unit"), which is configured to distribute the high-voltage power supply (e.g. 400 V) to the battery group, in order to charge the latter, and (if present) to a system bus or power supply bus (e.g. DC-link) to supply the traction inverter 6 and, hence, the electric motor 2.

The function of the HVPDU mainly is that of allowing all components that are part of the high-voltage line (HV) to be connected to one another. Furthermore, on the inside, it normally houses protection systems (fuses, thermal-magnetic switches, etc.) and control systems (contactors) as well as possible further components, such as I/V sensors, pre-charge circuit, etc.. From a constructive point of view, the HVPDU is a "box" where all HV wires converge through passwall connectors or adapters or other connectors.

In some electric vehicles, such as trucks or lorries, the battery group 4 is arranged at the centre relative to the frame, so as to centralize physical loads, the electric motor and the inverter are arranged in the rear area of the vehicle, whereas the HVPDU 8 is arranged at the front. Due to the significant dimensions of these vehicle and to the large space taken up by the battery group 4, a wiring (generically indicated with number 9) is needed in order to allow the batteries of the battery group 4 to be connected to one another in parallel and in order to allow the high voltage power supply to reach the front and the rear of the vehicle, said wiring being complicated, tanking up a lot of space and increasing the weight of the electric vehicle 1.

Therefore, the object of the invention is to overcome the critical aspects discussed above.

### SUMMARY OF THE INVENTION

The aforesaid object is reached by a battery for an electric vehicle, by a power supply system of an electric vehicle including an array of said batteries and by an electric vehicle including said power supply system, as defined in the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 schematically shows a known electric vehicle with the sole elements deemed to be useful to understand the invention;
- figure 2 schematically shows a battery according to an aspect the invention;
- figure 3 shows a power supply system including an array of batteries of the type shown in figure 2, which are electrically connected to one another in parallel; and
- figure 4 schematically shows an electric vehicle provided with the power supply system of figure 3, with the sole elements deemed to be useful to understand the invention.

### DETAILED DESCRIPTION OF THE INVENTION

According to an aspect of the invention, each battery shown in figure 1, belonging to a battery group of an electric vehicle, is changed in order to reduce the need for an external wiring between the front and the rear of the electric vehicle.

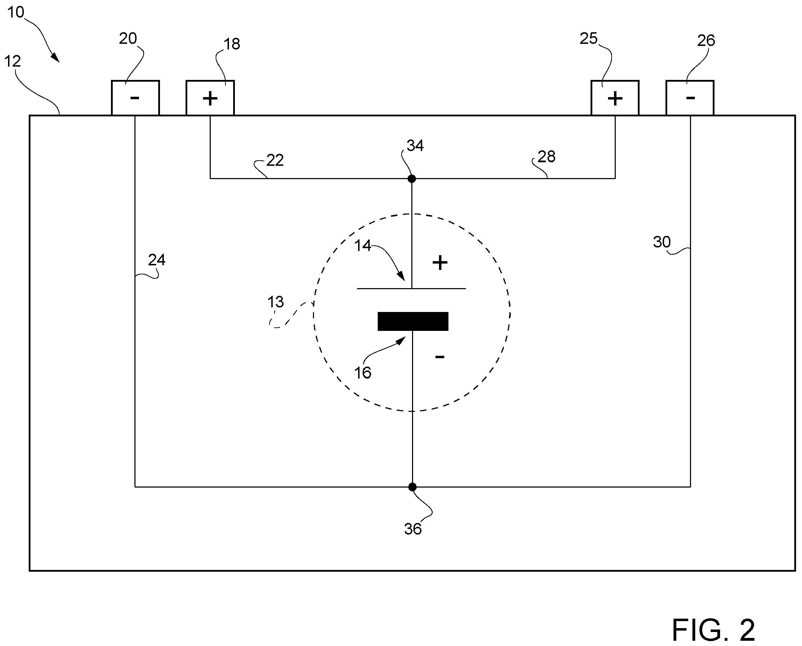

In particular, figure 2 schematically shows a battery 10 changed according to the invention.

The battery 10 comprises a casing 12, which is typically made of a plastic material and is designed to house, on the inside, functional elements and components of the battery. The casing 12 is sealed and does not allow, during the use of the battery (namely, when the battery is fitted on board the vehicle), access to the inner components of the battery. The battery 10 is, for example, a lithium ion battery. Other possible technologies include lead batteries, NiMH batteries, NiCd batteries, ZEBRA batteries or, in general, electrochemical batteries.

The inner structure of a lithium ion battery is constituted by storage cells (generically identified with number 13), which are energy storing elements are and contained inside the casing 12, which protects and isolates them from the outside.

The storage cells 13 are connected between a positive electrode - or cathode - 14 and a negative electrode - or anode - 16.

The storage cells 13 are connected to one another in series or in parallel, depending on the constructive technology of the battery 10. In case of parallel connection, each storage cell has a positive pole of its connected to the cathode 14 and a negative pole of its connected to the anode 16. In case of series connection, the positive pole of each storage cell is connected to the negative pole of the following storage cell; the positive and negative poles of the final storage battery of the electrical series are connected to the cathode 14 and to the anode 16, respectively.

Regardless of the connection and of the structure of the storage cells, the battery 10 has, on the outside, namely in the area of the outer wall of the casing 12, a first cathode connector 18 and a first anode connector 20, which are configured to allow electric access to the cathode 14 and to the anode 16, respectively, on the inside of the casing 12. To this aim, the battery 10 includes a first and a second bus bar 22, 24, which are configured and arranged so as to electrically connect the cathode 14 to the first cathode connector 18 and the anode 16 to the first anode connector 20, respectively.

According to an aspect of the invention, the battery 10 further comprises a second cathode connector 25 and a second anode connector 26, which are configured to allow further electric access to the cathode 14 and to the anode 16, respectively, on the inside of the casing 12. To this aim, the battery 10 further includes a third and a fourth bus bar 28, 30, which are configured and arranged so as to electrically connect the cathode 14 to the second cathode connector 25 and the anode 16 to the second anode connector 26, respectively.

The first, the second, the third and the fourth bus bar 22, 24, 28, 30 are manufactured in a known manner; in particular, the first and the second bus bar 22, 24 are already present in known batteries to connect the cathode 14 to the first cathode connector 18 and the anode 16 to the first anode connector 20. The third and the fourth bud bar 28, 30 are designed and manufactured so as to be completely similar the first and the second bus bar 22, 24.

By way of non-limiting example, the third and the fourth bus bar 28, 30 are electrical cables or rigid metal connectors or conductive plates or the like and have a cross section which is sized so as to allow the nominal current provided by the battery 10 to flow through. Aluminium can be used, for example, to manufacture them, due to its good electrical conductivity and because of its small weight. Each bus bar, when it is made up of metal sheets, has - for example - a thickness of 2 - 3 mm. The mechanical coupling between the bus bars 28, 30 and the respective cathode and anode 14, 16 can take place in the area of the node 34 and 36, respectively, of figure 2. Basically, the node 34 corresponds to a mechanical connection (e.g. through threaded coupling) between the first and the third bus bar 22, 28, which also creates, at the same time, an electrical connection between the two bus bars 22, 28; similarly, the node 36 corresponds to a mechanical connection (e.g. through threaded coupling) between the second and the fourth bus bar 24, 30, which also creates, at the same time, an electrical coupling between the two bus bars 24, 30.

The cathode connectors 18, 25 and the anode connectors 20, 26 allow the current to flow out of the storage cells 13 in order to be used by the electric vehicle. In use, the battery 10 typically is part of an array of batteries, which, in use, cooperate to supply power to the electric vehicle.

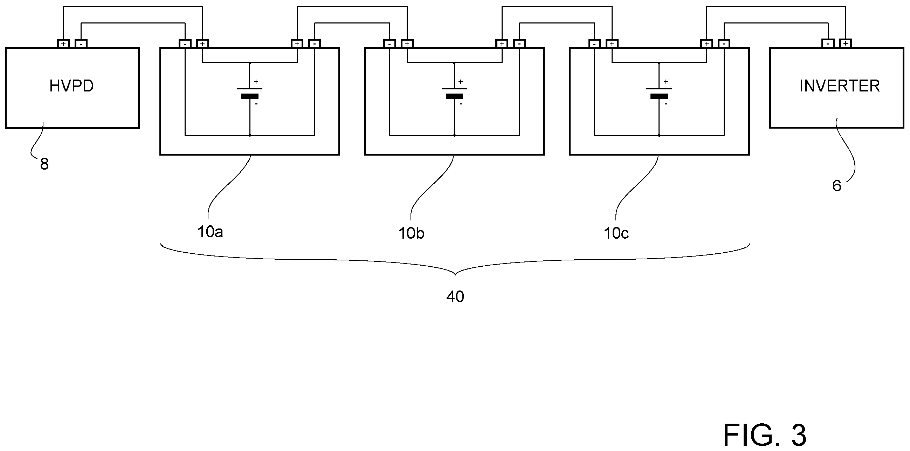

Figure 3 shows a power supply system of an electric vehicle, which comprises a battery array 40 connected between the HVPDU module 8 and the traction inverter 6. The battery array 40 includes a plurality of batteries 10a-10c. Three batteries 10a-10c are shown and described in this example, but the invention also applies, as evident to a person skilled in the art, both to an array including two sole batteries and to an array including a any number of batteries larger than three. Furthermore, according to the description hereinafter, the invention can evidently be also applied to one single battery.

Each battery 10a-10c of the array 40 is of the type shown in figure 2 (battery 10). The batteries 10a-10c are connected to one another in parallel, using the bus bars 22, 24, 28, 30 described with reference to figure 2.

In particular, the battery 10a is connected to the HVPDU module 8 by means of its own first cathode connector 18 and of its own first anode connector 20, so as to receive the power supplied by the HVPDU module 8. The second cathode connector 25 and the second anode connector 26 of the battery 10a are connected to the first cathode connector 18 and to the first anode connector 20 of the battery 10b, respectively. In turn, the second cathode connector 25 and the second anode connector 26 of the battery 10b are connected to the first cathode connector 18 and to the first anode connector 20 of the battery 10c, respectively. The second cathode connector 25 and the second anode connector 26 of the battery 10c are connected to the traction inverter 6, so as to provide the traction inverter 6 with the power supply energy of the electric motor.

Through the presence of the bus bars 22, 24, 28, 30, which are arranged on the inside of each battery 10a-10c, all batteries 10a-10c of the array 40 are connected to one another in parallel. Indeed, by means of the first and the third bus bar 22, 28, the nodes 34 of all batteries 10a-10c are connected to one another and are further connected both to the HVPDU module 8 and to the traction inverter 6. At the same time, by means of the second and the fourth bus bar 24, 30, the nodes 36 of all batteries 10a-10c are connected to one another and are further connected both to the HVPDU module 8 and to the traction inverter 6.

The wiring on the outside of the batteries 10a-10c, in order to create the connection described above, is limited to the connections involving the connectors 18, 20, 25, 26 of batteries that can physically be arranged adjacent to one another (battery 10a with battery 10b and battery 10b with battery 10c).

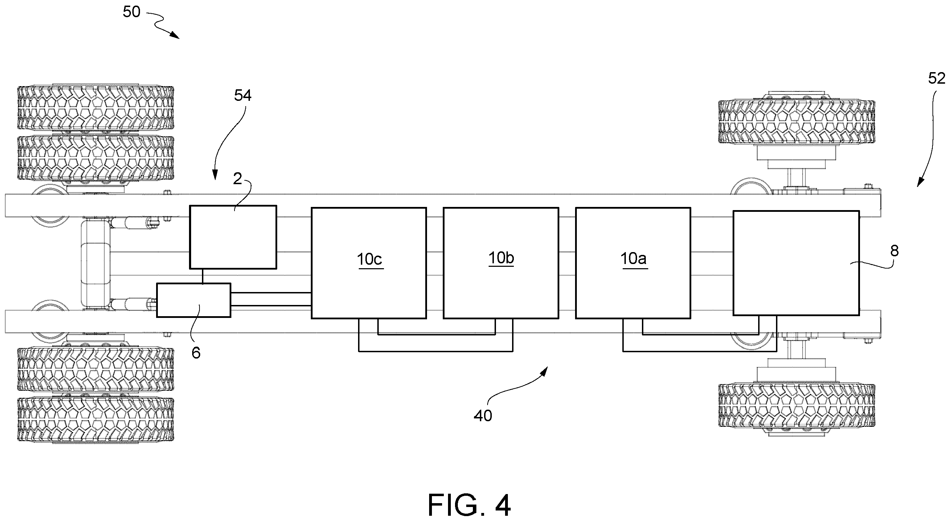

Figure 4 schematically shows an electric vehicle 50 comprising the power supply system of figure 3. The electric vehicle 50 comprises a front 52 and a rear 54. The front 52 generically is the system constituted by the front wheel or wheels and of the suspension and steering devices connected to them. The rear generically is the system constituted by the rear wheels and of the suspension devices connected to them. Since the electric vehicle 50, in the example, is a rear-wheel drive vehicle, the traction inverter 6 and the electric motor 2 are arranged in the rear area of the vehicle.

However, the invention can evidently be applied to a front-wheel drive vehicle; in this case, the traction inverter 6 and the electric motor 2 are arranged in the front area of the vehicle.

The electric vehicle 50 includes a frame portion 56, which is arranged between the front 52 and the rear 54 and houses the battery array 40.

Owing to the above, the advantages of the subject-matter of the invention are evident. Indeed, the wiring architecture suggested herein allows for an optimization of the HV wiring, with a consequent significant weight reduction compared to known architectures with a traditional wiring made on the outside. Furthermore, the invention, besides reducing weight, optimizes the production cycle of an electric vehicle in an assembly line.

Finally, the subject-matter of the invention can be subjected to changes and variants, which, though, do not go beyond the scope of protection set forth in the appended claims.

## Claims

1. A battery (10) for an electric vehicle, comprising a casing (12) which houses externally a first cathode connector (18), a second cathode connector (25), a first anode connector (20), and a second anode connector (20), and which houses internally a group of storage cells (13) electrically arranged between a common cathode node (34) and a common anode node (36), a first bus bar (22) connecting the common cathode node (34) to the first cathode connector (18), a second bus bar (28) connecting the common cathode node (34) to the second cathode connector (25), a third bus bar (24) connecting the common anode node (36) to the first anode connector (20), and a fourth bus bar (30) connecting the common anode node (36) to the second anode connector (26) .

2. The battery according to claim 1, chosen in the group including: lithium battery, lead-acid battery, NiMH battery, NiCd battery, ZEBRA battery, electrochemical accumulator.

3. The battery according to claim 1 or 2, wherein said first, second, third and fourth bus bar (22, 28, 24, 30) are chosen among: electrical cables, rigid metal connectors, conductive plates.

4. The battery according to anyone of the preceding claims, wherein the first and second bus bar (22, 28) form a direct electrical connection between the first and second cathode connector (18, 25) of each of the first and second battery (10a-10b).

5. The battery according to anyone of the preceding claims, wherein the third and the fourth bus bar (24, 30) form a direct electrical connection between the first and second anode connector (20, 26) of each one of the first and second battery (10a-10b).

6. Power supply system of an electric vehicle, including:
- a traction inverter (6), operationally coupled to an electric traction motor of said electric vehicle;
- an energy distribution module (8);
- an array of batteries (40), including at least a first battery (10a) according to any one of claims 1-5 and a second battery (10b) according to any one of claims 1-5, said battery array (40) being electrically connected between the power distribution module (8) and the traction inverter (6),
wherein: the first cathode connector (18) and the first anode connector of the first battery (10a) are electrically coupled to the power distribution module (8); the second cathode connector (18) and the second anode connector of the first battery (10a) are directly connected to the first cathode connector (18) and the first anode connector of the second battery (10b) respectively; and the second cathode connector(18) and the second anode connector of the second battery (10c) are electrically coupled to the traction inverter (6), so as to realize a parallel connection of the first and second battery (10a-10b) between the power distribution module (8) and the traction inverter (6).

7. Electric vehicle, including a power supply system according to claim 6, wherein said traction inverter (6) is arranged at the rear of said vehicle, said power distribution module (8) is arranged at the front of said vehicle, and said battery array (40) is arranged between the front and rear of the vehicle.
